# EUROPEAN PATENT APPLICATION

(11) **EP 4 617 158 A1**
(43) Date of publication of application: **17.09.2025**
(21) Application number: 25163158.6
(22) Date of filing: 12.03.2025
(51) Int. Cl.: B62J 11/00, B62J 45/42

(54) **TUBE MOUNTED SENSOR HOUSING FOR MICRO-MOBILITY VEHICLES**

(30) Priority: 15.03.2024 GR 20240100199
(71) Applicant: Cyclopolis Bike Sharing Systems Ltd, 145 61 Kifissia Athens (GR)
(72) Inventor: Siakantaris, Charalampos, 132 31 Athens (GR); Koryllos, Konstantinos, 145 61 Athens (GR); Davlias, Orestis, 116 31 Athens (GR); Doxas, Nikolaos, 146 71 Athens (GR); Maragkakis, Michail, Chania, Crete (GR)
(74) Representative: Bringer IP

(57) **Abstract**

A tube mounted sensor housing includes a base with a concave exterior profile and flat interior profile and a sensor chamber formed at the interior profile and defining an interior void. Also included are an air ingress channel disposed between an exterior edge of the base and the interior void of the sensor chamber, and an air egress channel disposed between the interior void of the sensor chamber and the exterior edge of the base. Yet further, an assembly of two separable half covers is removably fixed to the base. One of the half covers includes an air ingress port and an air egress port, such that when the assembly is fixed to the base, the air ingress port aligns with the exterior edge of the base at the air ingress channel, and the air egress port aligns with the exterior edge of the base at the air egress channel.

## Description

### BACKGROUND OF THE INVENTION

### Field of the Invention

The present invention relates to a sensor housing and more particularly to a sensor housing adapted for fixation to a micro-mobility vehicle.

### Description of the Related Art

A sensor is a device that transduces elements of an external environment into which the sensor has been placed and converts those elements into a processible indication. Rudimentary examples include devices which sense light, temperature, pressure or humidity. More complex examples include molecular sensors adapted to detect and quantify a volume of specific chemical molecules present in the atmosphere surrounding the sensor. In most instances, a sensor is included as part of a larger system adapted to transform the processible indication into digitally manipulable values in a host computing system by programmatic logic.

Given the sensitivity of a typical sensor, in many instances, a sensor housing is provided into which the sensor is mounted. The sensor housing provides several functions for the benefit of the sensor. First, the sensor housing protects the sensor from the deleterious effects of the environment including sunlight, moisture and dust. Second, the sensor housing provides a convenient housing into which the sensor can mount and with which the sensor can be secured to a base such as a wall, ceiling, door or window. Third, the sensor housing provides a container in which multiple different sensors may be secured enjoying some common access to critical resources such as power and communications.

Yet, to the extent that the sensor must sense aspects of the environment, the sensor must maintain sufficient exposure to that environment. As such, the housing must be of adequate internal volume to support ample exposure of one or more contained sensors to the relevant portion of the environment. In this particular circumstance of a molecular sensor, the housing further must guarantee sufficient movement of the exterior atmosphere in proximity of the sensing components of the molecular sensor. Thus, both volume and airflow can be important considerations in the design and performance of a sensor housing.

Adapting a sensor housing to a vehicle simply compounds the complexity of a sufficiently performing sensor housing. On a fixed surface of an immovable object, the sensor housing can take almost any shape and provide almost any volume necessary to assure the satisfactory performance of the encapsulated sensors. However, on a moving vehicle--especially a micro-mobility vehicle adapted to be powered at least on part by a human being, the size and shape of the housing is constrained by the space available onto which the sensor housing can be mounted, the need for the aerodynamic performance of the micro-mobility vehicle, and the limited locations at which the housing can be mounted to the micro-mobility vehicle.

### BRIEF SUMMARY OF THE INVENTION

Embodiments of the present invention address deficiencies of the art in respect to a sensor housing for use with a micro-mobility vehicle and provide a novel and non-obvious method, system and computer program product for a tube mounted sensor for micro-mobility vehicles. In an embodiment of the invention, a tube mounted sensor housing includes a base with a concave exterior profile and a flat interior profile and a sensor chamber formed at the flat interior profile and defining an interior void. The housing additionally includes an air ingress channel disposed between an exterior edge of the base and the interior void of the sensor chamber, and an air egress channel disposed between the interior void of the sensor chamber and the exterior edge of the base.

The housing yet further includes a separable cover assembly of two separable half covers removably fixed to the base. Notably, one of the half covers includes an air ingress port and an air egress port, such that when the separable cover assembly is fixed to the base, the air ingress port aligns with the exterior edge of the base at the air ingress channel, and the air egress port aligns with the exterior edge of the base at the air egress channel. In one aspect of the embodiment, a distal end of each of the half covers has a concave shaped end identical in diameter to the concave exterior profile of the base.

Notably, a particulate matter sensor is positioned within the interior void defined by the sensor chamber and electrically coupled to a battery mounted to the flat interior profile of the base and externally to the sensor chamber. The particulate matter sensor can include a fan powered by the battery. As well, a sound sensor can be mounted to the flat interior profile of the base externally to the sensor chamber. Yet further, a humidity sensor can be mounted to the flat interior profile of the base externally to the sensor chamber. Even yet further, a heart rate monitoring printed circuit board can be mounted to the flat interior profile of the base externally to the sensor chamber.

In another embodiment of the invention, a micro-mobility vehicle is adapted to incorporate a particulate matter sensor. The vehicle includes handlebars attached to a frame to which at least one fixed wheel and one steerable wheel is secured. The frame includes a primarily vertically oriented tubular segment and a horizontally oriented segment such as those found in a bicycle, tricycle or scooter. Of import, a tube mounted sensor housing is attached to the primarily vertically oriented tubular segment. In one aspect of the embodiment, the tube mounted sensor housing is attached to the primarily vertically oriented tubular segment with clamps, one of the clamps clamping a proximal end of the housing to a top portion of the primarily vertically oriented tubular segment, and another of the clamps claiming a distal end of the housing to a bottom portion of the primarily vertically oriented tubular segment.

The tube mounted sensor includes a base with a concave exterior profile and a flat interior profile, the concave exterior profile matching an exterior profile of the primarily vertically oriented tubular segment. The housing further includes a sensor chamber formed at the flat interior profile and defining an interior void. In this regard, a particulate matter sensor is positioned within the interior void defined by the sensor chamber and electrically coupled to a battery mounted to the flat interior profile of the base and externally to the sensor chamber along, and a fan powered by the battery.

The housing yet further includes an air ingress channel disposed between an exterior edge of the base and the interior void of the sensor chamber, and an air egress channel disposed between the interior void of the sensor chamber and the exterior edge of the base. Finally, the housing includes a separable cover assembly of two separable half covers removably fixed to the base wherein a distal end of each of the half covers has a concave shaped end identical in diameter to the concave exterior profile of the base. Importantly, one of the half covers includes an air ingress port and an air egress port, such that when the separable cover assembly is fixed to the base, the air ingress port aligns with the exterior edge of the base at the air ingress channel, and the air egress port aligns with the exterior edge of the base at the air egress channel.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is perspective view of a tube mounted sensor housing adapted for mounting to a down tube of a micro-mobility vehicle;
Figure 2 is a schematic illustration of the tube mounted sensor housing of Figure 1;
Figure 3A and 3B, taken together, are a cut away view of the tube mounted sensor housing illustrating the ingress flow and egress flow of air from an exterior portion of the housing into the sensor chamber; and,
Figure 4 is a pictorial illustration of a micro-mobility vehicle onto which the tube mounted sensor of Figure 1 has been mounted.

### DETAILED DESCRIPTION OF THE INVENTION

Embodiments of the invention provide for a tube mounted sensor housing adapted for mounting to a down tube of a micro-mobility vehicle. In accordance with the inventive arrangements, a tube mounted sensor housing is provided which includes a base with a concave exterior profile and flat interior profile and a sensor chamber formed at the interior profile and defining an interior void. Also included are an air ingress channel disposed between an exterior edge of the base and the interior void of the sensor chamber, and an air egress channel disposed between the interior void of the sensor chamber and the exterior edge of the base. Yet further, an assembly of two separable half covers is removably fixed to the base. One of the half covers includes an air ingress port and an air egress port, such that when the assembly is fixed to the base, the air ingress port aligns with the exterior edge of the base at the air ingress channel, and the air egress port aligns with the exterior edge of the base at the air egress channel. In this way, a sensor housing can be provided which adapts to the movement of a micro-mobility vehicle and assures sufficient air flow through the sensors disposed therein.

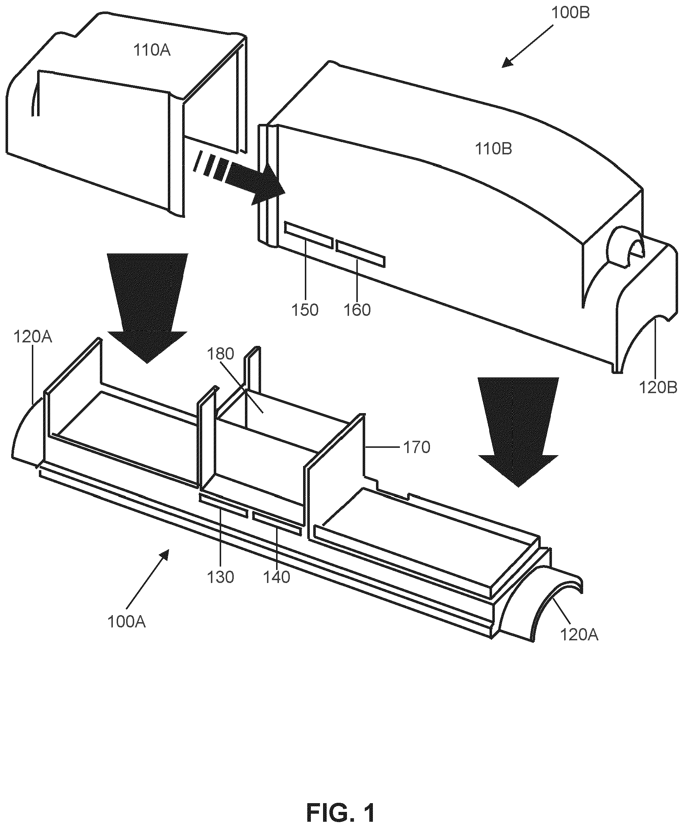

In further illustration, Figure 1 is a perspective view of a tube mounted sensor housing adapted for mounting to a down tube of a micro-mobility vehicle. As shown in Figure 1, a tube mounted sensor housing includes a base 100A and an assembly 100B of two half covers 110A, 110B. The base 100A has a concave exterior profile 120A and flat interior profile and a sensor chamber 170 formed at the interior profile and defining an interior void 180. Importantly, the base has an air ingress channel 130 disposed between an exterior edge of the base 100A and the interior void 180 of the sensor chamber 170, and an air egress channel 140 disposed between the interior void 180 of the sensor chamber 170 and the exterior edge of the base 100A.

Notably, one of the half covers 110B includes an air ingress port 150 and an air egress port 160, such that when the separable cover assembly 100B is fixed to the base 100A, the air ingress port 150 aligns with the exterior edge of the base at the air ingress channel 130, and the air egress port 160 aligns with the exterior edge of the base 100A at the air egress channel 140. As can be seen, a distal end of each of the half covers 110A, 110B has a concave shaped end 120B identical in diameter to the concave exterior profile of the base 120A.

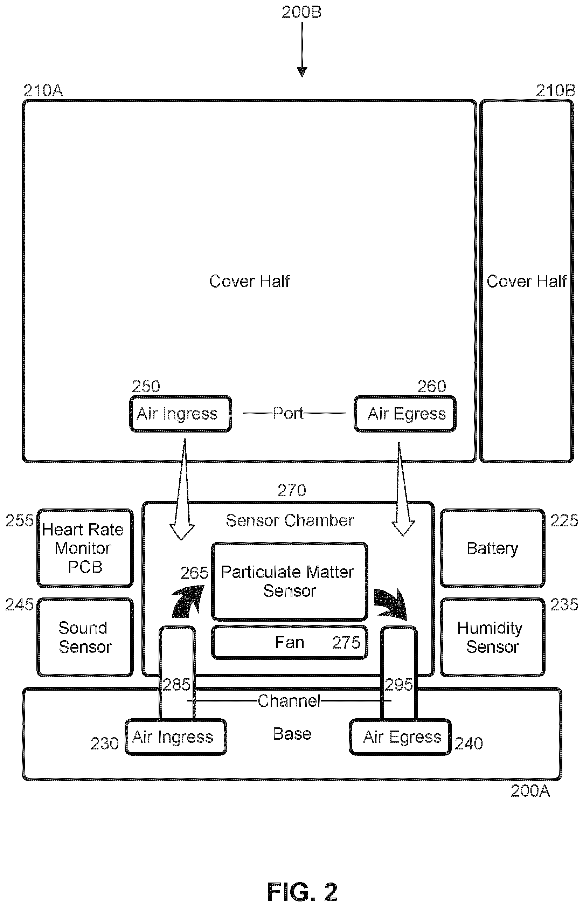

In further illustration, Figure 2 schematically shows the tube mounted sensor housing of Figure 1. Referring to Figure 2, a tube mounted sensor includes a base 200A and cover assembly 200B of two different cover halves 210A, 210B. The base 200A supports any number of sensors including a humidity sensor 235, a sound sensor 245 and a heart rate monitor printed circuit board 255, as well as a global positioning sensor or a temperature sensor (not shown). Of import, the base 200A includes a particulate matter sensor 265 positioned within a sensor chamber 270 and adapted to sense a volume of particulate matter flowing across the particulate matter sensor 265 by operation of fan 275. In respect to the sensors 235, 245, 255, 265, a battery 225 powers the sensors 235, 245, 255, 265.

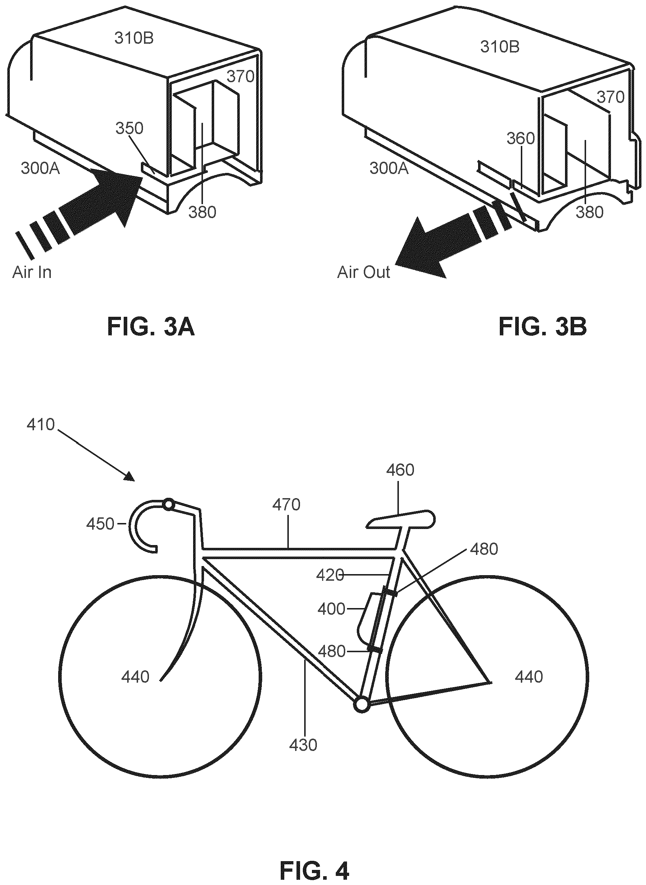

The cover assembly 200B includes different cover halves 210A, 210B with air ingress port 250 of cover half 210/\ adapted to communicate with air ingress opening 230 in the base 200A leading to channel 285 into the particulate matter sensor 265. Likewise, the air egress port 260 of the cover half 210A adapted to communicate with the air egress opening 240 in the base 200A leading from channel 295. In more specific illustration, as shown in Figures 3A and 3B, which taken together, are a cut away view of the housing of Figure 2 showing the directional flow of air into and out from the airflow ports, air flows into the air ingress port 350 of the cover half 310B through a channel into the interior void 380 of the sensor chamber 370 of the base 300A. Conversely, air within the interior void 380 of the sensor chamber 370 exits through the egress port 360 from a separate channel leading from the interior void 380.

In different aspects of the invention, the tubular housing can be affixed to different micro-mobility vehicles including bicycles, tricycles and scooters. To that end, as shown in Figure 4, which is a pictorial illustration of a micro-mobility vehicle 410 onto which the tube mounted sensor of Figure 1 has been mounted, the tube mounted sensor housing 400 is affixed to a seat tube 420 with clamps 480 positioned at distal and proximal ends of the housing 400. The seat tube 420 is part of a frame of a bicycle that includes a cross tube (commonly referred to as "downtube") 430 and top tube 470, a seat 460, handlebars 450 and wheels 440 of which at least one is steerable by the handlebars 450.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "include", "includes", and/or "including," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A tube mounted sensor housing comprising:
a base with a concave exterior profile and a flat interior profile;
a sensor chamber formed at the flat interior profile and defining an interior void;
an air ingress channel disposed between an exterior edge of the base and the interior void of the sensor chamber, and an air egress channel disposed between the interior void of the sensor chamber and the exterior edge of the base; and,
a separable cover assembly of two separable half covers removably fixed to the base,
wherein one of the half covers comprises an air ingress port and an air egress port, such that when the separable cover assembly is fixed to the base, the air ingress port aligns with the exterior edge of the base at the air ingress channel, and the air egress port aligns with the exterior edge of the base at the air egress channel.

2. The tube mounted sensor housing of claim 1, wherein a distal end of each of the half covers has a concave shaped end identical in diameter to the concave exterior profile of the base.

3. The tube mounted sensor housing of claim 1, wherein a particulate matter sensor is positioned within the interior void defined by the sensor chamber and electrically coupled to a battery mounted to the flat interior profile of the base and externally to the sensor chamber.

4. The tube mounted sensor housing of claim 3, wherein the particulate matter sensor includes a fan powered by the battery.

5. The tube mounted sensor housing of claim 3, further comprising a sound sensor mounted to the flat interior profile of the base externally to the sensor chamber.

6. The tube mounted sensor housing of claim 3, further comprising a humidity sensor mounted to the flat interior profile of the base externally to the sensor chamber.

7. The tube mounted sensor housing of claim 3, further comprising a heart rate monitoring printed circuit board mounted to the flat interior profile of the base externally to the sensor chamber.

8. A micro-mobility vehicle adapted to incorporate a particulate matter sensor, the vehicle comprising:
handlebars attached to a frame to which at least one fixed wheel and one steerable wheel is secured, the frame comprising a primarily vertically oriented tubular segment and a horizontally oriented segment; and,
a tube mounted sensor housing attached to the primarily vertically oriented tubular segment, the tube mounted sensor comprising:
a base with a concave exterior profile and a flat interior profile, the concave exterior profile matching an exterior profile of the primarily vertically oriented tubular segment;
a sensor chamber formed at the flat interior profile and defining an interior void;
a particulate matter sensor positioned within the interior void defined by the sensor chamber and electrically coupled to a battery mounted to the flat interior profile of the base and externally to the sensor chamber along, and a fan powered by the battery;
an air ingress channel disposed between an exterior edge of the base and the interior void of the sensor chamber, and an air egress channel disposed between the interior void of the sensor chamber and the exterior edge of the base; and,
a separable cover assembly of two separable half covers removably fixed to the base wherein a distal end of each of the half covers has a concave shaped end identical in diameter to the concave exterior profile of the base,
wherein one of the half covers comprises an air ingress port and an air egress port, such that when the separable cover assembly is fixed to the base, the air ingress port aligns with the exterior edge of the base at the air ingress channel, and the air egress port aligns with the exterior edge of the base at the air egress channel.

9. The micro-mobility vehicle of claim 8, wherein the tube mounted sensor housing is attached to the primarily vertically oriented tubular segment with clamps, one of the clamps clamping a proximal end of the housing to a top portion of the primarily vertically oriented tubular segment, and another of the clamps claiming a distal end of the housing to a bottom portion of the primarily vertically oriented tubular segment.

10. The micro-mobility vehicle of claim 9, wherein the vehicle is a bicycle and the primarily vertically oriented tubular segment is a seat tube of the bicycle.
